# EUROPEAN PATENT SPECIFICATION

(11) **EP 3 704 938 B1**
(45) Date of publication and mention of the grant of the patent: **07.06.2023**
(21) Application number: 19160951.0
(22) Date of filing: 06.03.2019
(51) Int. Cl.: A01M 7/00

(54) **A METHOD FOR OPERATING AN AGRICULTURAL SPRAYER**
VERFAHREN ZUM BETREIBEN EINER LANDWIRTSCHAFTLICHEN SPRITZE
PROCÉDÉ DE FONCTIONNEMENT D'UN PULVÉRISATEUR AGRICOLE

(43) Date of publication of application: 09.09.2020
(73) Proprietor: Kverneland Group Nieuw-Vennep B.V., 2153 LR Nieuw-Vennep (NL)
(72) Inventor: BAKKER, Bob, 2153 LR Nieuw-Vennep (NL); POMMERENING, Patrick, 2153 LR Nieuw-Vennep (NL)
(74) Representative: Bittner, Thomas L.

(56) References cited:
- EP-A1- 0 916 259
- GB-A- 1 518 401
- JP-A- 2010 184 161
- US-A- 4 196 852

## Description

The present disclosure refers to a method for operating an agricultural sprayer.

### Background

An agricultural sprayer is a device used to spray a liquid. For example, the agricultural sprayer may be used for applying herbicide, pesticide, and fertilizers on agricultural crops. The agricultural sprayer may be a trailed sprayer that is connected to a tractor or a self-propelled machine. In document EP 2 666 352 A1 for a harvesting machine it is proposed to provide a wear-resistant and hydrophobic coating on a surface on which the harvested material is conveyed in the harvesting machine. The wear-resistant and hydrophobic coating is provided by a diamondlike carbon coating.

Document GB 1 518 401 discloses a method for operating an agricultural sprayer. The sprayer is provided with container containing agricultural chemicals. The containers are provided with valve connections to a manifold which is in turn connected to a measuring tank. Flow of the various chemicals to the measuring tank is controlled at the valve connections to the manifold. One of the containers is provided with a surfactant, and the surfactant is drawn through the manifold and into the measuring tank after the other chemicals. The surfactant acts to flash the manifold and the connection to the measuring tank to minimize the amount of concentrated liquid chemicals left standing in the system. As a result, corrosion of all fitting in the system shall be minimized.

Document JP 2010 184 161 refers to a method of cleaning an agrochemical sprayer. The method includes cleaning an object of the agrochemical sprayer using alkaline water, and subsequently cleaning the same using acidic water.

Document US 4 196 852 refers to a measuring, mixing and spraying apparatus for a tractor. The apparatus is operated under pressure from a compressor mounted onto the front of the tractor. Along one side of the tractor is a diluent storage tank which provides storage on the tractor for the diluent used to dilute a text sample being sprayed. Connected to the storage tank is a diluent measuring tank specifically designed to receive a predetermined amount of diluent from the diluent storage tank. The diluent measuring tank is connected to a diluent mixing tank, and in this mixing tank the measured amount of diluent from the diluent tank is mixed with a specific quantity of the test sample. The diluent mixing tank in turn, leads to a spray boom which dispenses the diluted and mixed test sample.

Document EP 0 916 259 A1 discloses a field-spraying apparatus for spraying plots of land planted with cultivated plants with plant protection agent and the like. The apparatus comprises at least one elongated arm provided with spraying nozzles which in the operating condition extends transversely to the direction of travel of the field-spraying apparatus, the spraying nozzles being fed by means of a ring main and one or more section cocks with an agent to be sprayed. The ring main has a portion connected to the section cocks having a central portion which, via a central feed line, is connected to a main supply member, and a portion which is remote from said portion and which is connected, via an additional line section, to the main supply member. The main supply member is connected, via a multiple cock, to the central feed line and to the additional line section, the multiple cock having at least a first position in which only the central feed line is connected to the main supply member, and a second position in which the additional line section is connected to the main supply member.

### Summary

It is an object to provide a method for operating an agricultural sprayer allowing for more efficient operation of the agricultural sprayer.

For solving the problem, a method for operating an agricultural sprayer according to the independent claim 1 is provided. Additional embodiments are disclosed in the dependent claims.

According to an aspect, a method for operating an agricultural sprayer is provided, the agricultural sprayer having a tank and pipe system configured for receiving and distributing a liquid material, and the method comprising cleaning an inner surface of the tank and pipe system, the cleaning comprising rinsing the tank and pipe system with a rinsing material containing an non-ionic tenside.

The tank and pipe system provides for a storage and flowing system of the agricultural machine for receiving, storing, and carrying the liquid material to be distributed by the agricultural sprayer. The tank and pipe system may be provided with one or more valves. There may be a plurality of tanks. Tank and pipe systems as such are known for agricultural sprayers with different design.

The application of the non-ionic tenside will reduce the surface tension of watery liquids in the tank and pipe system. The amount of rest liquid in the tank and pipe system will be reduced, since it will flow off more easily. Likelihood for contamination can be reduced.

One or more nozzles may be connected to the tank and pipe system, the nozzles configured for distributing the liquid material received by the tank and pipe system.

The agricultural sprayer may be carried by a tractor. Alternatively, the agricultural sprayer may be provided on an implement hooked to a tractor. Also, a self-propelled agricultural sprayer may be provided.

The rinsing may be conducted with a cleaning system provided for cleaning the tank and pipe system.

The rinsing may comprise spraying the rinsing material on the inner surface of the tank and pipe system. One or more nozzles provided within the tank and pipe system, for example in the tank, may be used for spraying.

The rinsing may further comprise feeding a liquid stream containing the rinsing material to the pipe and tank system and the liquid stream flowing through the tank and pipe system.

The cleaning may be further comprising applying a cleaning material to the tank and pipe system, the rinsing being applied subsequently to the cleaning with the cleaning material.

The method further comprises: Applying first cleaning of the tank and pipe system after a first use cycle of the tank and pipe system, the first use cycle comprising distributing liquid material received in the tank and pipe system in a field, and the first cleaning comprising the rinsing of the tank and pipe system with the rinsing material containing the non-ionic tenside; and applying second cleaning of the tank and pipe system after a second use cycle of the tank and pipe system, the second use cycle comprising distributing liquid material received in the tank and pipe system in the field, and the second cleaning being free of the rinsing of the tank and pipe system with the rinsing material containing the non-ionic ten-side.

The method may comprise detecting a threshold number for use cycles of the tank and pipe system by a counting device, and in response to the detecting of the threshold, applying the first rinsing. If the threshold is not detected, application of the second rinsing is applied.

The method may be further comprising supplying the rinsing material form a reservoir separated from the tank receiving the liquid material to be distributed.

The rinsing material may be supplied from a reservoir separated from a reservoir receiving the cleaning material. The reservoir may connect to one or more spraying nozzles provided with the tank and pipe system by one or more pipes.

There may be storage containers or reservoirs (in addition to one or more tanks for the liquid material to be distributed) for receiving the cleaning and the rinsing material.

The method may further comprise producing a hydrophobic coating on at least part of the inner surface of the tank and pipe system by applying a hydrophobic material to the inner surface. With respect to such embodiment, an agricultural sprayer may be provided. The agricultural sprayer comprises a tank and pipe system configured for receiving and distributing a liquid material, wherein a hydrophobic coating is provided on at least part of an inner surface of the tank and pipe system. The hydrophobic coating helps to avoid contamination of the inner surface of the tank and pipe system. The hydrophobic coating will also minimize the (unwanted) amount of liquid remaining in the tank and pipe (rest liquid).

The applying of the hydrophobic material may comprise spraying a spray material on the inner surface, the spray material containing the hydrophobic material. The spray material may be applied to the inner surface by spraying using one or more nozzles provided within the tank and pipe system, for example in the tank. The spray material may be provided from an additional tank separated from the tank receiving the liquid material for distribution. The additional tank may connect to one or more spraying nozzles by one or more pipes.

In another example, in addition or alternatively, the hydrophobic material may be applied to the inner surface by vaporization.

The applying may comprise rinsing the tank and pipe system with further rinsing material flowing through tank and pipe system, the further rinsing material containing the hydrophobic material. The further rinsing material or substance may be provided from an additional tank. In case both spraying and rinsing are to be conducted for producing the hydrophobic coating, a combined spraying and rinsing material containing the hydrophobic material may be applied. The combined spraying and rinsing material may be provided from the additional tank.

In this and other embodiments, the additional tank may be part of the agricultural sprayer. Alternatively, the additional tank may be provided separately from the agricultural sprayer. If the additional tank is provided as part of the agricultural sprayer, the additional tank may be fixedly or detachable connected to the tank and pipe system.

The applying may comprise applying at least one of the spraying material and the further rinsing material by the cleaning system provided for cleaning the tank and pipe system. In this embodiment the cleaning system provided for cleaning the tank and pipe system in operation is additionally used for applying the spraying material and / or the further rinsing material containing the hydrophobic material for producing the hydrophobic coating. Thus, the cleaning system is used as a multifunctional component of the agricultural sprayer. In a cleaning process the cleaning system will clean the tank and pipe system after it was used for distributing the liquid material (use cycle). For example, clean water may be applied by the cleaning system for cleaning and the tank and pipe system. For applying the hydrophobic coating, the cleaning system may be connected to the (additional) reservoir or tank storing the spraying or rinsing material containing the hydrophobic material or substance. Such connecting may be conducted automatically in response to some connecting signal received from a controller in case of producing the hydrophobic coating. Alternatively, the cleaning system may be connected manually to the additional tank storing the spraying or rinsing material containing the hydrophobic material or substance. For applying the spraying material, one or more nozzles of the cleaning system may be used, for example, one or more nozzles provided in the tank configured to receive the liquid material to be distributed.

The method may further comprise applying the hydrophobic material after the cleaning conducted for the tank and pipe system. The application of the hydrophobic material after cleaning may be conducted as a first time application of the hydrophobic material. Alternatively, such application may be provided as a refreshing or reestablishing of the hydrophobic coating applied before. It may be provided, that the hydrophobic material is applied after each cleaning process conducted for the tank and pipe system in operation.

The method may further comprise applying the hydrophobic material prior to a first use of the agricultural sprayer. For example, the hydrophobic material may be applied at the time of production of the agricultural sprayer. For example, in a production process, besides spraying and rinsing, other methods for producing a hydrophobic coating on the inner surface of the tank and pipe system may be applied. Such methods are known as such for applying hydrophobic coating on a surface.

The method may further comprise: detecting a surface contamination for the tank and pipe system by a contamination sensor, and, in response to the detecting, applying the hydrophobic material. Alternatively, the application of the hydrophobic material may be started or initiated manually by the user. The contamination sensor may be provided with a camera configured for taking images indicating contamination of the inner surface of the tank and pipe system. For example, a biofilm provided on the inner surface of the tank and pipe system after the agricultural sprayer has been used may be detected by the contamination sensor. The step of applying the hydrophobic material may be conducted in dependence on one or more parameters of the contamination detected, for example, depending on a layer thickness and / or color of the contamination on the inner surface.

The method may further comprise: detecting a threshold number for use cycles by a counting device, and, in response to the detecting, applying the hydrophobic material. After the agricultural sprayer has been used several times for distributing the liquid material (plurality of use cycles) such as herbicide, pesticide, or fertilizer, the hydrophobic material is applied automatically. Alternatively, the application of the hydrophobic material may be initiated by the user manually after a certain number of use cycles. A use cycle may be characterized by a predefined number of fillings of the tank. Such tank filling may be detected by a level indicator or sensor.

Alternatively or in addition, other controlling parameters may be detected and assessed or evaluated for controlling the application of the hydrophobic material. For example, a time period parameter may be detected, the time period parameter indicating at least one of a time period after last application of the hydrophobic material and a time period of use of the agricultural sprayer. Such embodiments similarly may apply to the rinsing by means of the rinsing material containing the non-ionic tenside.

The hydrophobic material may comprises at least one of the following substances: perfluorinated compound, paraffine, lipid, and silicon. A superhydrophobic or ultrahydrphobic coating may be applied to at least part of the inner surface of the tank and pipe system.

The embodiments disclosed above with respect to the method for surface coating may be applied to the agricultural sprayer *mutatis mutandis.*

### Description of further embodiments

Following, further embodiments are disclosed by referring two figures. In the figures, show:
- Fig. 1: a schematic block diagram for a method for operating in an agricultural sprayer;
- Fig. 2: a schematic block diagram for a method for surface coating in an agricultural sprayer: and
- Fig. 3: a schematic representation of a tank and pipe system of an agricultural sprayer.

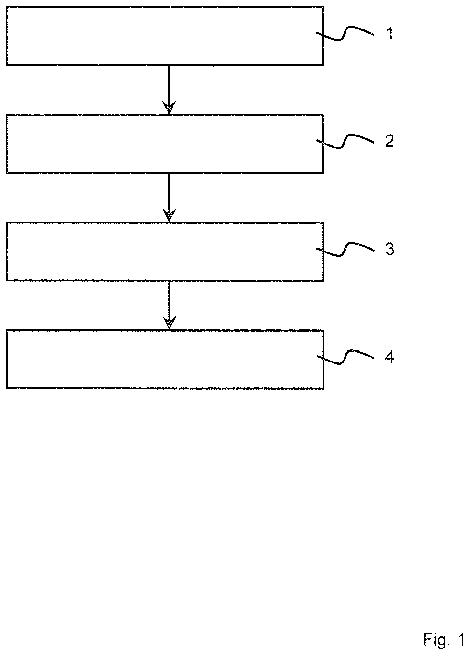

Fig. 1 refers to a block diagram for a method for operating an agricultural sprayer. In step 1 an agricultural sprayer is provided. The agricultural sprayer is having a tank and pipe system configured for receiving and distributing a liquid material which is to be distributed by the agricultural sprayer. For example, distribution of the liquid material is conducted by a nozzle system connected to the tank and pipe system. The tank and pipe system may comprise one or more tanks connected to or separated from each other.

In step 2 the agricultural sprayer is receiving a liquid material to be distributed in the tank and pipe system. The liquid material is distributed in the field by the agricultural sprayer in step 3 (use cycle). Following, the tank and pipe system is cleaned in step 4. Such cleaning comprises rinsing the tank and pipe system with a rinsing material containing a non-ionic tenside also referred to as non-ionic surfactant. They may be an aqueous solution containing the non-ionic ten-side which is applied as the rinsing material (liquid). The tank and pipe system may be rinsed in part or completely.

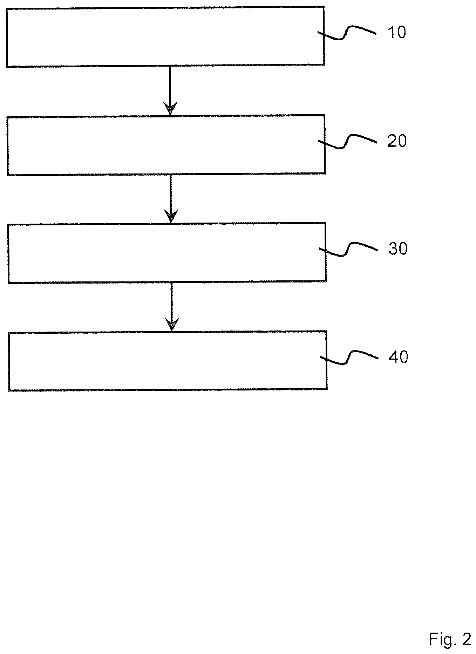

Fig. 2 refers to a block diagram for another method for operating an agricultural sprayer which may be combined with one or more steps from the method in Fig. 1. Specifically, a surface coating is provided. In step 10 an agricultural sprayer is provided. Following, in step 20 a hydrophobic coating is produced on at least part of an inner surface of the tank and pipe system by applying a hydrophobic material to the inner surface. In step 30 the agricultural sprayer is receiving a liquid material to be distributed in the tank and pipe system. The liquid material is distributed by the agricultural sprayer in step 40.

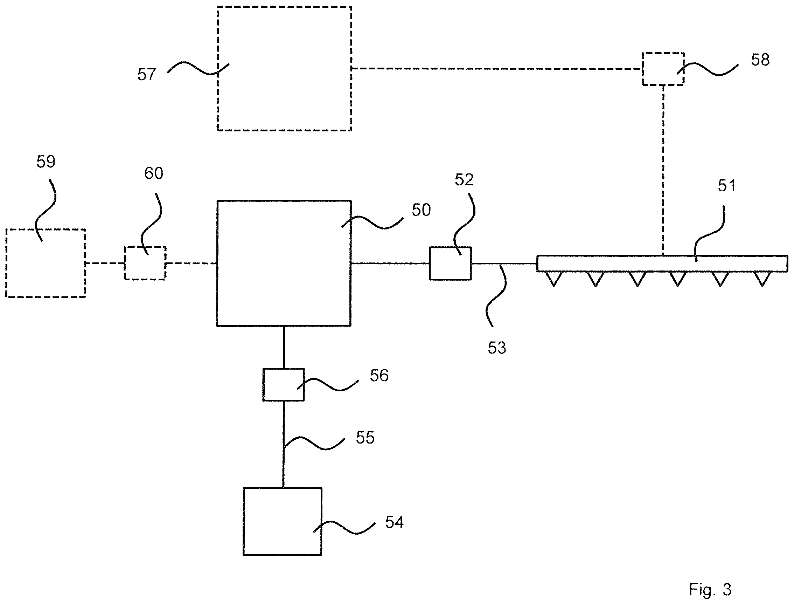

Fig. 3 shows a schematic representation of a tank and pipe system for an agricultural sprayer. The tank and pipe system is configured to receive in a tank 50 a liquid material to be distributed, the liquid material comprising, for example, herbicide, pesticide, or fertilizer. The liquid material is distributed by an arrangement of nozzles 51. A pump 52 is used for providing the liquid material from the tank 50 to the arrangement of nozzles 51 through a pipe or pipe arrangement 53.

A separate tank 54 is connected to the tank 50 by a pipe or pipe arrangement 55. A cleaning material and / or a rinsing material may be pumped from the separated tank 54 by a further pump 56. The separate tank 54 is provided for a cleaning and / or rinsing system configured to clean and / or rinse elements or components of the tank and pipe system after use. For example, the tank 50 and the pipe 53 may be cleaned after a liquid material has been distributed by the arrangement of nozzles 51 (use cycle). By cleaning the tank and pipe system is prepared for use with another liquid material to be distributed, for example, a fertilizer. Also, cleaning and rinsing may be applied for avoiding surface contamination in the tank and pipe system. In the course of the rinsing, the rinsing material containing the non-ionic tenside (non-ionic surfactant) is applied.

In addition, the separate tank 54 may receive a hydrophobic or substance which is applied to the tank and pipe system through the pipe 55 for producing a hydrophobic surface coating on an inner surface of the tank and pipe system, for example, in the tank 50, and the pipe 53.

Optional elements of the tank and pipe system are depicted by dotted lines in Fig. 3. In addition to the tank 50 and the separated tank 54, an additional tank 57 for receiving additional liquid material to be distributed may be provided in combination with an additional pump 58.

An additional separate tank 59 may be provided for receiving a substance containing the hydrophobic material in combination with still a further pump 60. In such embodiment a substance for cleaning and rinsing may be provided from the separated tank 54, but the hydrophobic material or substance will be provided from the additional separate tank 59 to, for example, the tank 50 and the pipe 53 for producing the hydrophobic surface coating.

Some of the embodiments described above refer to producing and / or refreshing hydrophobic surface coating in the tank and pipe system after such tank and pipe system has been produced and has optionally already been in use. In an alternative example, the hydrophobic surface coating on at least part of the inner surface of the tank and pipe system may be produced at the time of production already.

In another example, a superhydrophobic or ultrahydrophobic coating may be applied to at least part of the inner surface of the tank and pipe system. A superhydrophobic surface coating provides a non-wettable surface with high water contact angles and faciles sliding of drops. Such surface coating provides a surface layer that (even better) repeals water. Droplets hitting this kind of coating can fully rebound in the shape of a column or pancake. Superhydrophobic coatings can be made from different materials, for example, materials selected from the following group: manganese oxide polystyrene (MnO2 / PS) nano-composite, zinc oxide polystyrene (ZnO / PS) nano-composite, precipitated calcium carbonate, carbon nano-tube structures, silica nano-coating, fluorinated silanes, and fluoropolymer coatings. Silica-based coatings can be gel-based and can be applied either by dipping the object to be coating into the gale or via aerosol spray.

## Claims

1. A method for operating an agricultural sprayer, having a tank (50) and pipe system (53) configured for receiving and distributing a liquid material, the method comprising cleaning an inner surface of the tank and pipe system, the cleaning comprising
- applying a cleaning material to the tank (50) and pipe system (53); the method being **characterized in that** it comprises the step
- rinsing the tank and pipe system with a rinsing material containing an non-ionic tenside, the rinsing being applied subsequently to the cleaning with the cleaning material.

2. The method according to claim 1, wherein the rinsing comprises spraying the rinsing material on the inner surface of the tank (50) and the pipe system (53).

3. The method according to claim 1 or 2, wherein the rinsing comprises feeding a liquid stream containing the rinsing material to the pipe and tank system and the liquid stream flowing through the tank (50) and the pipe system (53).

4. The method according to at least one of the preceding claims, further comprising
- applying first cleaning of tank (50) and the pipe system (53) after a first use cycle of the tank and pipe system, the first use cycle comprising distributing liquid material received in the tank (50) and the pipe system (53) in a field, and the first cleaning comprising the rinsing of the tank (50) and the pipe system (53) with the rinsing material containing the non-ionic tenside; and
- applying second cleaning of the tank (50) and the pipe system (53) after a second use cycle of the tank and pipe system, the second use cycle comprising distributing liquid material received in the tank and pipe system in the field, and the second cleaning being free of the rinsing of the tank (50) and the pipe system (53) with the rinsing material containing the non-ionic tenside.

5. The method according to claim 4, further comprising
- detecting a threshold number for use cycles of the tank (50) and the pipe system (53) system by a counting device; and
- in response to the detecting of the threshold, applying the first rinsing.

6. The method according to at least one of the preceding claims, further comprising supplying the rinsing material form a reservoir separated from the tank receiving the liquid material to be distributed.

7. The method according to at least one of the preceding claims, as far as referring to claim 4, further comprising supplying the rinsing material form a reservoir separated from a reservoir receiving the cleaning material.

8. The method according to at least one of the preceding claims, further comprising producing a hydrophobic coating on at least part of the inner surface of the tank (50) and the pipe system (53) by applying a hydrophobic material to the inner surface.

## Patentansprüche

1. Verfahren zum Betreiben einer landwirtschaftlichen Feldspritze aufweisend einen Tank-(50) und Leitungssystem (53), welches dazu eingerichtet ist, ein flüssiges Material aufzunehmen und zu verteilen, das Verfahren umfassend Reinigen einer Innenfläche des Tank- und Leitungssystems, das Reinigen umfassend
- Aufbringen eines Reinigungsmaterials im Tank- (50) und Leitungssystem (53); wobei das Verfahren **dadurch gekennzeichnet ist, dass** es den Schritt
- Spülen des Tank- und Leitungssystems mit einem Spülmaterial, welches ein nichtionisches Tensid enthält, umfasst, wobei das Spülen anschließend an das Reinigen mit dem Reinigungsmaterial vorgenommen wird.

2. Verfahren nach Anspruch 1, wobei das Spülen das Sprühen des Spülmaterials auf die Innenfläche des Tank- (50) und Leitungssystems (53) umfasst.

3. Verfahren nach Anspruch 1 oder 2, wobei das Spülen das Einspeisen eines Flüssigkeitsstroms, welcher das Spülmaterial aufweist, in das Leitungs- und Tanksystem und das Fließen des Flüssigkeitsstroms durch das Tank- (50) und Leitungssystem (53) umfasst.

4. Verfahren nach mindestens einem der vorstehenden Ansprüche, ferner umfassend
- Anwenden eines ersten Reinigens des Tank- (50) und Leitungssystems (53) nach einem ersten Nutzungszyklus des Tank- und Leitungssystems, wobei der erste Nutzungszyklus das Verteilen im Tank- (50) und Leitungssystem (53) aufgenommenen flüssigen Materials auf einem Feld umfasst, und das erste Reinigen das Spülen des Tank- (50) und Leitungssystems (53) mit dem Spülmaterial, welches das nichtionische Tensid enthält, umfasst; und
- Anwenden eines zweiten Reinigens des Tank- (50) und Leitungssystems (53) nach einem zweiten Nutzungszyklus des Tank- und Leitungssystems, wobei der zweite Nutzungszyklus das Verteilen im Tank- und Leitungssystem aufgenommenen flüssigen Materials auf dem Feld umfasst, und das zweite Reinigen frei von einem Spülen des Tank- (50) und Leitungssystems (53) mit dem Spülmaterial, welches das nichtionische Tensid enthält, ist.

5. Verfahren nach Anspruch 4, ferner umfassend
- Erfassen einer Schwellenanzahl an Nutzungszyklen des Tank- (50) und Leitungssystems (53) durch eine Zählvorrichtung; und
- als Reaktion auf das Erfassen des Schwellenwerts, Anwenden des ersten Spülens.

6. Verfahren nach mindestens einem der vorstehenden Ansprüche, ferner umfassend das Zuführen des Spülmaterials aus einem Vorratsbehälter, der getrennt vom Tank ist, welcher das zu verteilende flüssige Material aufnimmt.

7. Verfahren nach mindestens einem der vorstehenden Ansprüche, bezogen auf Anspruch 4, ferner umfassend das Zuführen des Spülmaterials aus einem Vorratsbehälter, der getrennt ist von einem Vorratsbehälter, welcher das Reinigungsmaterial aufnimmt.

8. Verfahren nach mindestens einem der vorstehenden Ansprüche, ferner umfassend das Herstellen einer hydrophoben Beschichtung auf mindestens einem Teil der Innenfläche des Tank- (50) und Leitungssystems (53) durch Auftragen eines hydrophoben Materials auf der Innenfläche.

## Revendications

1. Procédé d'utilisation d'un pulvérisateur agricole comportant un réservoir (50) et un système de tuyaux (53), configuré pour recevoir et distribuer un matériau liquide, ce procédé comprenant le nettoyage d'une surface intérieure du réservoir et du système de tuyaux, le nettoyage comprenant
- l'application d'un matériau nettoyant sur le réservoir (50) et le système de tuyaux (53) ; ce procédé étant **caractérisé en ce qu'**il comprend l'étape de
- rinçage du réservoir et du système de tuyaux avec un matériau de rinçage contenant un agent tensioactif non ionique, le rinçage étant appliqué après le nettoyage avec le matériau nettoyant.

2. Procédé selon la revendication 1, dans lequel le rinçage comprend la pulvérisation du matériau de rinçage sur la surface intérieure du réservoir (50) et le système de tuyaux (53).

3. Procédé selon la revendication 1 ou 2, dans lequel le rinçage comprend l'apport d'un flux de liquide contenant le matériau de rinçage dans le tuyau et le système de réservoir et le flux de liquide s'écoulant à travers le réservoir (50) et le système de tuyaux (53).

4. Procédé selon l'une quelconque des revendications précédentes, comprenant en outre
- l'application d'un premier nettoyage du réservoir (50) et du système de tuyaux (53) après un premier cycle d'utilisation du réservoir et du système de tuyaux, le premier cycle d'utilisation comprenant la distribution de matériau liquide reçu dans le réservoir (50) et le système de tuyaux (53) dans un champ, et le premier nettoyage comprenant le rinçage du réservoir (50) et du système de tuyaux (53) avec le matériau de rinçage contenant l'agent tensioactif non ionique ; et
- l'application d'un second nettoyage du réservoir (50) et du système de tuyaux (53) après un second cycle d'utilisation du réservoir et du système de tuyaux, le second cycle d'utilisation comprenant la distribution de matériau liquide reçu dans le réservoir et le système de tuyaux dans le champ, et le second nettoyage étant exempt du rinçage du réservoir (50) et du système de tuyaux (53) avec le matériau de rinçage contenant l'agent tensioactif non ionique.

5. Procédé selon la revendication 4, comprenant en outre
- la détection d'un nombre seuil de cycles d'utilisation du réservoir (50) et du système de tuyaux (53) par un système de comptage ; et
- en réaction à la détection du seuil, l'application du premier rinçage.

6. Procédé selon l'une quelconque des revendications précédentes, comprenant en outre l'apport du matériau de rinçage depuis une citerne séparée du réservoir recevant le matériau liquide à distribuer.

7. Procédé selon l'une quelconque des revendications précédentes, tant qu'elle se réfère à la revendication 4, comprenant en outre la fourniture du matériau de rinçage depuis une citerne séparée d'un réservoir recevant le matériau nettoyant.

8. Procédé selon l'une quelconque des revendications précédentes, comprenant en outre la production d'un revêtement hydrophobe sur au moins une partie de la surface intérieure du réservoir (50) et du système de tuyaux (53) en appliquant un matériau hydrophobe sur la surface intérieure.
